# EUROPÄISCHE PATENTANMELDUNG

(11) **EP 0 819 564 A2**
(43) Veröffentlichungstag der Anmeldung: **21.01.1998**
(21) Anmeldenummer: 97111724.7
(22) Anmeldetag: 10.07.1997
(51) Int. Cl.: B60M 1/12

(54) **Einrichtung für die Stromversorgung einer elektrischen Lokomotive**

(30) Priorität: 19.07.1996 DE 19629126
(71) Anmelder: Krupp Fördertechnik GmbH, 45143 Essen (DE)
(72) Erfinder: Lücking, Manfred, 45277 Essen (DE); Zimek, Dieter, 45139 Essen (DE)

(57) **Zusammenfassung**

Bei einer Einrichtung für die Stromversorgung einer elektrischen Lokomotive (1) während der Durchfahrt durch einen nicht mit einem Fahrdraht überspannten Bereich, beispielsweise während der Durchfahrt durch eine Umschlaganlage,
- weist die Einrichtung für die Stromversorgung der mit einem Stromabnehmer (2) versehenen Lokomotive (1) einen verfahrbaren Versorgungswagen (3) auf, der mit einem Ausleger (4) versehen ist,
- ist an dem Ausleger (4) ein Kontaktbügel (5) angebracht, der einen Fahrdraht simuliert,
- stehen die Lokomotive (1) und der Versorgungswagen (3) mit einem Wegemeßsystem in Verbindung, durch das die Position des Kontaktbügels (5) auf die jeweilige Position des Stromabnehmers (2) der Lokomotive (1) ausgerichtet wird.

## Beschreibung

Die Erfindung betrifft eine Einrichtung für die Stromversorgung einer elektrischen Lokomotive während der Durchfahrt durch einen nicht mit einem Fahrdraht überspannten Bereich, beispielsweise während der Durchfahrt durch eine Umschlaganlage.

Innerhalb einer von elektrischen Lokomotiven befahrenen Strecke gibt es Gleisabschnitte, die nicht mit einem Fahrdraht überspannt sind, beispielsweise in Umschlaganlagen für den kombinierten Ladeverkehr zwischen Schienen- und Straßenfahrzeugen. Durch diese Umschlaganlagen müssen die Lokomotiven mit geringer Geschwindigkeit hinduchfahren. Es ist aber wegen der Überbauung der Gleise im Bereich dieser Umschlaganlagen mit einem Portalkran oder einem Knickarmkran häufig nicht möglich, innerhalb der Umschlaganlage einen Fahrdraht vorzusehen.

Die Stromversorgung elektrischer Lokomotiven innerhalb einer Umschlaganlage erfordert daher einen wegschwenkbaren Fahrdraht, wobei der Fahrdraht häufig über mehrere Gleise hinweggeschwenkt werden muß, oder Umschlaggeräte, die unterhalb des Fahrdrahtes alle im kombinierten Ladeverkehr üblichen Ladeeinheiten ausheben und umschlagen können. In beiden Fällen sind Arbeitsräume für die Umschlaggeräte sehr beengt und es ergeben sich zeitaufwendige Umschlagabläufe.

Die Erfindung bezweckt die Vermeidung der geschilderten Schwierigkeiten durch eine flexible und effiziente Stromversorgung der elektrischen Lokomotiven.

Die Lösung der gestellten Aufgabe besteht bei einer Einrichtung der eingangs genannten Art darin,
- daß die Einrichtung für die Stromversorgung der mit einem Stromabnehmer versehenen Lokomotive einen verfahrbaren Versorgungswagen aufweist, der mit einem Ausleger versehen ist,
- daß an dem Ausleger ein Kontaktbügel angebracht ist, der einen Fahrdraht simuliert,
- und daß die Lokomotive und der Versorgungswagen mit einem Wegemeßsystem in Verbindung stehen, durch das die Position des Kontaktbügels auf die jeweilige Position des Stromabnehmers der Lokomotive ausgerichtet wird.

Dadurch, daß sich infolge der erfindungsgemäßen Ausgestaltung der Einrichtung der Versorgungswagen synchron mit der Lokomotive bewegt, ist eine einwandfreie Stromzuführung zu der Lokomotive gewährleistet, ohne daß die Nachteile der bekannten Einrichtungen auftreten können.

In Ausgestaltung der Erfindung ist an dem Ausleger eine mechanische Schwenkvorrichtung für den Kontaktbügel angebracht, die es ermöglicht, daß der Kontaktbügel einen Fahrdraht mit sinusförmiger seitlicher Verschwenkung simuliert, so daß der Kontaktbügel während der gesamten Durchfahrt der Lokomotive durch die Umschlaganlage wie ein üblicher Fahrdraht wirkt.

Zweckmäßigerweise erfolgt die Stromzuführung zu dem Versorgungswagen über eine Schleifleitung oder über ein Kabel.

Der Versorgungswagen kann mit Schienenrädern versehen und auf den Eisenbahnschienen für die Lokomotive verfahrbar sein.

In weiterer Ausgestaltung der Erfindung ist der Versorgungswagen mit Stütz- und Führungsräder versehen, die auf entsprechenden I-Schiene laufen. Dies ermöglicht eine beliebige Anordnung des Fahrweges für den Versorgungswagen.

Je nach Art der Umschlaganlage ist der Versorgungswagen vor bzw. hinter der Lokomotive oder neben der Lokomotive geführt. Ein vor der Lokomotive geführter Versorgungswagen kann dabei über eine Hilfseinrichtung durch die Lokomotive selbst bewegt werden.

Bei einer bevorzugten Ausführungsform der Erfindung ist der Versorgungswagen an der aufgeständerten Kranbahn geführt. Hierbei ist die Stromzuführung besonders einfach, weil die Antriebsenergie für die Umschlaggeräte ebenfalls hier übertragen wird.

Eine weitere Verbesserung der Erfindung wird dadurch erzielt, daß auf dem Versorgungswagen ein Transformator angeordnet ist, der die Transformation auf die erforderliche Betriebsspannung an dem Kontaktbügel bewirkt. Hierbei kann eine reduzierte Leistung installiert werden, die für das langsame Durchfahren der Lokomotive durch die Umschlaganlage ausreichend ist.

Um die Herstellung und die Handhabung der Einrichtung zu vereinfachen ist der Ausleger als leichte Gitterrohrkonstruktion ausgebildet, die nach einem weiteren Merkmal der Erfindung mit Knickgelenken versehen ist, damit sich der Ausleger problemlos der Kontur des Lokomotivkopfes anpassen kann.

In der Zeichnung sind mehrere Ausführungsbeispiele der Einrichtung schematisch dargestellt. Es zeigen:
- Fig. 1: den vorderen Teil einer Lokomotive mit davor angeordnetem Versorgungswagen, in Seitenansicht;
- Fig. 2: den vorderen Teil einer Lokomotive mit einem anderen davor angeordneten Versorgungswagen, ebenfalls in Seitenansicht;
- Fig. 3: einen Versorgungswagen in Vorderansicht;
- Fig. 4: das Lichtraumprofil einer Lokomotive mit daneben angeordnetem Versorgungswagen in Vorderansicht;
- Fig. 5: das Lichtraumprofil einer Lokomotive mit an der aufgeständerten Kranbahn angeordnetem Versorgungswagen, ebenfalls in Vorderansicht.

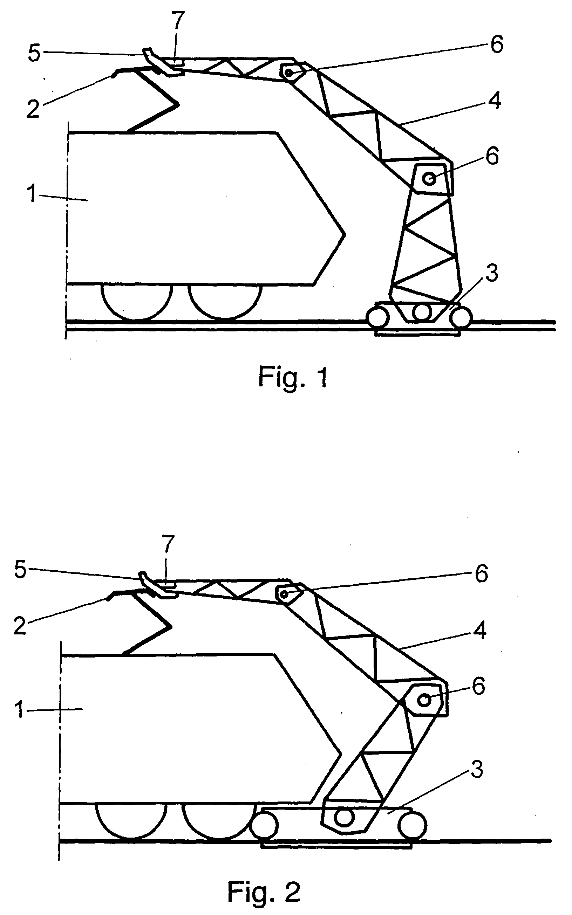

Die in den Fig. 1 und 2 dargestellte Lokomotive 1 ist mit einem Stromabnehmer 2 versehen. Vor der Lokomotive 1 - bezogen auf die Fahrtrichtung der Lokomotive 1 - befindet sich ein Versorgungswagen 3, der einen Ausleger 4 aufweist. An dem Ausleger 4 ist ein Kontaktbügel 5 angebracht, der die Funktion eines Fahrdrahtes übernimmt. Die Lokomotive 1 und der Versorgungswagen 3 stehen mit einem - nicht dargestellten - bekannten Wegemeßsystem in Verbindung. Das Wegemeßsystem richtet die Position des Kontaktbügels 5 auf die jeweilige Position des Stromabnehmers 2 der Lokomotive 1 aus.

Die Bewegung des Versorgungswagens 3 erfolgt bei dem in Fig. 2 dargestellten Ausführungsbeispiel durch die Lokomotive 1 selbst

An dem als leichte Gitterrohrkonstruktion mit Knickgelenken 6 ausgebildeten Ausleger 4 ist eine mechanische Schwenkvorrichtung 7 für den Kontaktbügel 5 angebracht.

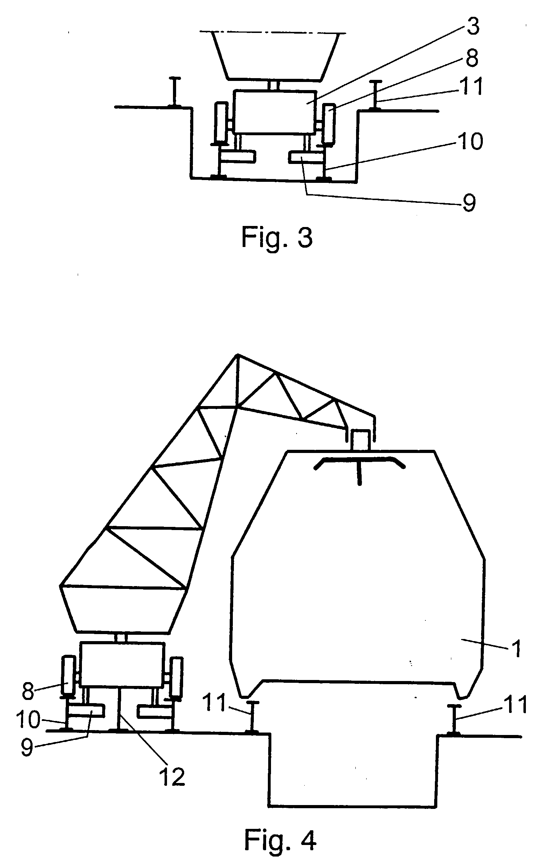

Wie Fig. 3 zeigt, ist der Versorgungswagen 3 mit Stützrädern 8 und mit Führungsrädern 9 versehen, die auf I-Schienen 10 laufen. Bei dem dargestellten Ausführungsbeispiel sind die I-Schienen 10 zwischen den Eisenbahnschienen 11 für die Lokomotive 1 angeordnet, so daß der Versorgungswagen 3 vor oder hinter der auf den Eisenbahnschienen 11 fahrenden Lokomotive geführt werden kann.

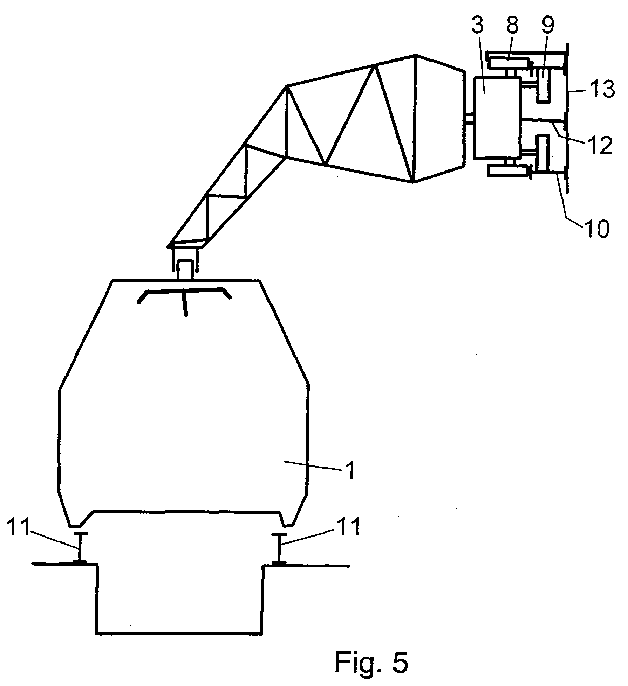

Bei den in den Fig. 4 und 5 dargestellten Ausführungsbeispielen sind I-Schienen 10 neben den Eisenbahnschienen 11 und somit neben der durch ihr Lichtraumprofil angedeuteten Lokomotive 1 angeordnet. In diesem Falle ist somit der Versorgungswagen 3 neben der Lokomotive 1 geführt. Die Stromzuführung zu dem Versorgungswagen 3 erfolgt hierbei über Schleifleitungen 12.

Die I-Schienen 10 können auch - wie aus Fig. 5 zu ersehen ist - an der aufgeständerten Kranbahn 13 angeordnet sein, so daß der Versorgungswagen 3 an der aufgeständerten Kranbahn 13 geführt ist.

## Patentansprüche

1. Einrichtung für die Stromversorgung einer elektrischen Lokomotive während der Durchfahrt durch einen nicht mit einem Fahrdraht überspannten Bereich, beispielsweise während der Durchfahrt durch eine Umschlaganlage,
**dadurch gekennzeichnet,**
1.1 daß die Einrichtung für die Stromversorgung der mit einem Stromabnehmer (2) versehenen Lokomotive (1) einen verfahrbaren Versorgungswagen (3) aufweist, der mit einem Ausleger (4) versehen ist,
1.2 daß an dem Ausleger (4) ein Kontaktbügel (5) angebracht ist, der einen Fahrdraht simuliert,
1.3 und daß die Lokomotive (1) und der Versorgungswagen (3) mit einem Wegemeßsystem in Verbindung stehen, durch das die Position des Kontaktbügels (5) auf die jeweilige Position des Stromabnehmers (2) der Lokomotive (1) ausgerichtet wird.

2. Einrichtung nach Anspruch 1, dadurch gekennzeichnet, daß an dem Ausleger (4) eine mechanische Schwenkvorrichtung (7) für den Kontaktbügel (5) angebracht ist, die es ermöglicht, daß der Kontaktbügel (5) einen Fahrdraht mit sinusförmiger seitlicher Verschwenkung simuliert.

3. Einrichtung nach Anspruch 1 oder 2, dadurch gekennzeichnet, daß die Stromzuführung zu dem Versorgungswagen (3) über eine Schleifleitung (12) erfolgt.

4. Einrichtung nach Anspruch 1 oder 2, dadurch gekennzeichnet, daß die Stromzuführung zu dem Versorgungswagen (3) über ein Kabel erfolgt.

5. Einrichtung nach einem der Ansprüche 1 bis 4, dadurch gekennzeichnet, daß der Versorgungswagen (3) mit Stütz- und Führungsrädern (8, 9) versehen ist, die auf entsprechenden I-Schienen (10) laufen.

6. Einrichtung nach einem der Ansprüche 1 bis 5, dadurch gekennzeichnet, daß der Versorgungswagen (3) vor bzw. hinter der Lokomotive (1) geführt ist.

7. Einrichtung nach einem der Ansprüche 1 bis 5, dadurch gekennzeichnet, daß der Versorgungswagen (3) neben der Lokomotive (1) geführt ist.

8. Einrichtung nach Anspruch 7, dadurch gekennzeichnet, daß der Versorgungswagen (3) an der aufgeständerten Kranbahn (13) geführt ist.

9. Einrichtung nach einem der Ansprüche 1 bis 8, dadurch gekennzeichnet, daß auf dem Versorgungswagen (3) ein Transformator angeordnet ist, der die Transformation auf die erforderliche Betriebsspannung an dem Kontaktbügel (5) bewirkt.

10. Einrichtung nach einem der Ansprüche 1 bis 9, dadurch gekennzeichnet, daß der Ausleger (4) als leichte Gitterrohrkonstruktion ausgebildet ist.

11. Einrichtung nach Anspruch 10, dadurch gekennzeichnet, daß die leichte Gitterrohrkonstruktion des Auslegers (4) mit Knickgelenken (6) versehen ist.
